Europäisches Patentamt

European Patent Office

Office européen des brevets

(11) Publication number: **0 321 447 B1**

## EUROPEAN PATENT SPECIFICATION

(45) Date of publication of patent specification: **06.04.94**   (51) Int. Cl.⁵: **B01D 69/08**, D01D 5/24, D01D 5/253

(21) Application number: **89100842.7**

(22) Date of filing: **12.11.85**

(60) Publication number of the earlier application in accordance with Art.76 EPC: **0 186 293**

The file contains technical information submitted after the application was filed and not included in this specification

(54) **Cellulose type hollow fibers.**

(30) Priority: **16.11.84 JP 240589/84**
**16.11.84 JP 240590/84**
**16.11.84 JP 240591/84**
**19.06.85 JP 131990/85**
**30.05.85 JP 115270/85**

(73) Proprietor: **TEIJIN LIMITED**
**11 Minamihonmachi 1-chome**
**Higashi-ku**
**Osaka-shi Osaka 541(JP)**

(72) Inventor: **Mizutani, Shoji**
**6-5 Katsuramachi 1-chome**
**Yamaguchi(JP)**
Inventor: **Taneda, Nobuo**
**52-32, Minamiiwakunimachi**
**5-Chome, Iwakuni-shi Yamaguchi(JP)**

(74) Representative: **Arthur, Bryan Edward et al**
**Withers & Rogers**
**4 Dyer's Buildings**
**Holborn**
**London EC1N 2JT (GB)**

(43) Date of publication of application:
**21.06.89 Bulletin  89/25**

(45) Publication of the grant of the patent:
**06.04.94 Bulletin  94/14**

(84) Designated Contracting States:
**DE FR GB IT NL SE**

(56) References cited:
**FR-A- 2 437 858**
**FR-A- 2 506 792**

**PATENT ABSTRACTS OF JAPAN, vol. 6, no. 31 (C-92)[909], 24th February 1982;& JP-A-56 148 907 (NIPPON ZEON K.K.) 18-11-1981**

EP 0 321 447 B1

Rank Xerox (UK) Business Services
(3.10/3.09/3.3.3)

PATENT ABSTACTS OF JAPAN, vol. 7, no. 289 (C-202)[1434], 23rd December 1983;& JP-A-58 169 510 (ASAHI MEDICAL K.K.) 06-10-1983

WPI, File Supplies, no. 74-20234v, Derwent Publications Ltd, London, GB;& JP-A-48 75 481 (TEIJIN LTD)

## Description

The present invention relates to hollow fibres for use in a blood treatment device and to a hollow fibre type blood treatment device comprising a shell filled with such hollow fibres.

Fluid separators comprising hollow fibres having a selective permeability have been practically used for reverse osmosis or hemodialysis.

Especially, hollow fibre type blood dialyzers have been vigorously used for purifying blood of patients suffering from renal insufficiency. In a blood dialyzer of this type, many permeable membranes, for example, hollow fibre membranes, are filled in a shell, and blood of a patient is passed through the hollow interiors and a dialyzing solution (or dialysate) is passed outside the membranes, that is, through the spaces between the membranes. Wastes in the blood are removed through the hollow fibres by dialysis to correct the electrolyte concentration and, by producing a difference of the pressure between the inside and outside of the hollow fibres, excessive water is removed from the blood by ultrafiltration. Furthermore, hollow fibres are used to remedy autoimmune diseases by separating only plasma from blood or removing a specific component from the separated plasma. Hollow fibres to be used for such blood treatments should allow selective permeation of specific solutes according to the intended use. The capacity of a hollow fibre depends on the material, the porosity (pore size and pore number) and the membrane thickness of the hollow fibre. For example, it is important how a number of hollow fibres should be bundled so as to increase the dialyzing efficiency of the entire membrane surface. For example, when hollow fibres are arranged in the longitudinal direction closely to one another, the dialyzing solution does not flow uniformly around the hollow fibres but forms specific flow paths, with the result that dialysis is hardly performed through hollow fibres not participating in these flow paths and the entire dialyzing effect is reduced. In the ordinary dialytic operation, the difference of the concentration between the inside and outside of the hollow fibre membrane is a driving force for the transport of the solute. Accordingly, it is necessary to make a contrivance on the shape of the hollow fibre per se so that the dialyzing solution flows through the outside space of the hollow fibre as uniformly as possible, the area having a larger boundary layer resistance is reduced as much as possible and the difference of the concentration between the blood side (the inner side of the hollow fibre) and the dialyzing solution side (the outer side of the hollow fibre) is increased.

The prior art includes various methods for the preparation of hollow fibres suitable for use in blood treatment devices. Thus, FR-A 2437858 discloses a method for the manufacture of cellulose-type hollow fibres by extrusion of a cellulose-cuprammonium solution into diluted caustic soda lye. FR-A 2506792 discloses a method according to which a cellulosic spinning dope is extruded through an annular nozzle into a non-coagulative liquid layer while passing a non-coagulative liquid through the centre of the fibre and, thereafter, passing the thread through a coagulative liquid to regenerate the fibre. JP-A 56148907 discloses hollow synthetic fibres with reduced wall thickness prepared by spinning cellulose acetate, an acrylic polymer or PVC through a spinneret with ring-shaped slits.

It is a primary object of the present invention to provide hollow fibres suitable for and intended for use in a blood treatment device and which give a high blood treatment efficiency, and to provide a blood treatment device incorporating such hollow fibres.

Another object of the present invention is to provide finned hollow fibres which can be stably and easily prepared and which can be used in an optimum filling state in a blood treatment device.

Accordingly, the invention provides a blood treatment device comprising hollow fibres contained in a shell, the hollow fibres having a selective permeability and having on the periphery thereof 1 to 10 fins extended in the longitudinal direction, characterised in that the fibres are made by plasticising and melt spinning a cellulose ester polymer having an average degree of polymerisation of at least 150, the ration H/W of the fin height H to the fin width W is at least 0.5, and the re-wet elongation is lower than 3%.

The invention also provides cellulose-type hollow fibres for use in a blood treatment device comprising hollow fibres contained in a shell, the fibres having a selective permeability and having on the periphery thereof 1 to 10 fins extended in the longitudinal direction, characterised in that the fibres are made by plasticising and melt spinning a cellulose ester polymer having an average degree of polymerisation of at least 150, the ratio H/W of the fin height H to the width W is at least 0.5, and the re-wet elongation is lower than 3%.

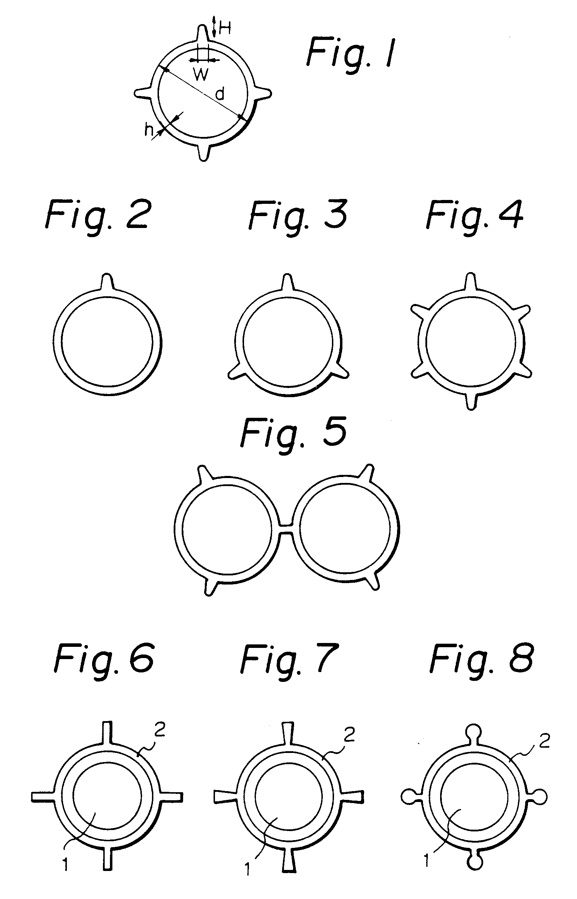

In the accompanying drawings, Figures 1, 2, 3, 4, and 5 are enlarged sectional views illustrating hollow fibres valuably used in the present invention and

Figures 6, 7, and 8 are diagrams illustrating examples of the shape of the nozzle for spinning hollow fibres valuably used in the present invention.

In the present invention, the number x of the fins in the hollow fibre is at least 1. However, if the number x of the fins is 11 or larger, reduction of the effective membrane area by the root portions of the fins

EP 0 321 447 B1

becomes conspicuous, resulting in drastic reduction of the solute dialyzing performance and the water permeation performance. The number x is ordinarily 1 to 10, but it is preferred that the number x be 2 to 8, especially 3 to 7.

The sections of typical examples of the finned hollow fibre valuably used in the present invention are shown in Figures 1 through 5.

Other dimensions of the hollow fibre are not particularly critical in the present invention. However, it is preferred that the outer diameter d be 100 to 500 $\mu$m, especially 200 to 300 $\mu$m, the membrane thickness h of the fin-free portion be 5 to 50 $\mu$m, especially 5 to 40 $\mu$m, particularly especially 10 to 25 $\mu$m, and the fin height H be 5 to 100 $\mu$m, particularly especially 10 to 65 $\mu$m. Moreover, it is preferred that the width W of the root portion of the fin be narrower than the width of the upper portion. Ordinarily, after the spinning solution is extruded from a spinneret, the root portion tends to be expanded by the surface tension. It is preferred that the width W be 15 to 50 $\mu$m, especially 20 to 40 $\mu$m. If the width is within this range, the circularity of the hollow fibre exclusive of the fin portion is good, and when the hollow fibre is used for a blood dialyzer, coagulation of blood in the hollow fibre is hardly caused or blood is hardly left in the hollow fibre.

The hollow fibre is characterised in that the ratio H/W of the fin height H to the fin width W is at least 0.5 If the ratio H/W is lower than 0.5, contact of hollow fibres with one another can hardly be prevented when they are filled in the blood treatment device. It is preferred that the ratio H/W be at least 0.8. Incidentally, the fin width W is the width of the fin at a position of 1/2 of the fin height H. It is also preferred that the ratio H/d of the average height H ($\mu$m) of fins to the average outer diameter d of the hollow fibre exclusive of the fin portion be 0.01 to 1, especially 0.02 to 0.5, particularly especially 0.03 to 0.2.

The sectional shape of the hollow fibre exclusive of the fin portion is not limited to a circular shape, but the section may be ellipsoidal. In the ellipsoidal section, the outer diameter d is a mean value of the long diameter and the short diameter. Furthermore, the fins on the periphery of the hollow fibre may have a spiral shape.

In the case where a plurality of fins are formed on one hollow fibre, the respective fins may be the same or different in the height H or the width W. At least two hollow fibres may be connected through fins. In this case, however, the number of the connected hollow fibres is preferably 2.

From the point of view of blood treatment efficiency, it is preferred that the water permeation capacity UFR of the hollow fibre exclusive of the fin portion be in the range of from 1.0 to 30.0 ml/hr.mmHg, especially 3.0 to 10.0 ml/hr.mmHg. It is also preferred that most of the hollow fibre membranes have at least two fins extending in the longitudinal direction on the periphery thereof and the total effective membrane area S (m$^2$), the ultrafiltration coefficient UFR (ml/hr.mmHg) and the urea clearance (or urea dialysance) CLU (ml/min) of the dialyzer should satisfy any of the following requirements (IV) through (VI):

(IV)     UFR/S ≦ 6 and CLU/UFR ≧ 30 in case of 0.5 ≦ S ≦ 1.0,

(V)     UFR/S ≦ 5 and CLU/UFR ≧ 30 in case of 1.0 < S ≦ 1.6, and

(VI)     UFR/S ≦ 4 and CLU/UFR ≧ 25 in case of 1.6 < S ≦ 2.5.

In accordance with one preferred embodiment of the present invention, there is provided a fluid separator as set forth above, wherein the hollow fibre membranes are composed of a cellulose ester polymer, the thickness of the hollow fibre membranes exclusive of the fin portions is less than 50 and the effective membrane area is at least 0.7 m$^2$.

If the value of UFR/S exceeds the upper limit in each case, especially if the value of UFR/S exceeds 6, control of removal of water is difficult and excessive removal of water is often caused. If the value of CLU/UFR is smaller than the lower limit in each of the cases (IV) to (VI), especially if the value of CLU/UFR is smaller than 25, no satisfactory dialysis effect can be attained, and wastes are gradually accumulated in the body and so-called underdialysis is often caused to occur.

Selective-permeable hollow fibres used for the fluid separator of the present invention may have a plurality of crimps according to need. It is preferred that the amplitude of the crimps be 1 to 500%, especially 20 to 200%, of the outer diameter d of the hollow fibres. If the amplitude is smaller than 1% of d, no particular effect is attained by crimping. If the amplitude exceeds 500% of d, the flow resistance in the hollow fibres is increased and when the hollow fibres are used for blood treatment, blood is readily left in the hollow fibres. It is preferred that the wavelength of crimps in the hollow fibres of the present invention be 5 to 1000 times, especially 50 to 500 times, the outer diameter d of the hollow fibres.

4

If desired, in the blood treatment device of the present invention, selective-permeable hollow fibres may have a plurality of fins in which the average height is substantially different in the respective fins and/or the distance between two adjacent fins is substantially different. Furthermore, selective-permeable hollow fibres have at least three fins, a plurality of selective-permeable hollow fibres are bonded together through the fins, and the average height is substantially different in the fins other than the fins bonding the hollow fibres and/or the distance between two adjacent fins is substantially different.

A hollow fibre having a plurality of fins in which the average height of the highest fin is 1.5 to 10 times, especially 2 to 5 times, the average height of the lowest fin is especially preferred because contact or close approaching is not caused in the hollow fibres, a sealed space is hardly formed between the fins or between the fin and the hollow fibre wall and the fluid can flow freely.

Furthermore, it is preferred that in a plurality of fins, the maximum value of the distance between two adjacent fins be 1.5 to 10 times, especially 2 to 5 times, the minimum value of the distance between two adjacent fins. In case of hollow fibres having such fins, in a fluid separator having these hollow fibres filled therein, contact or close approaching is hardly caused and a sealed space is hardly formed between the fins or between the fin and the hollow fibre membrane, and the flowability of the fluid outside the hollow fibre is highly improved. The distance between two adjacent fins is the shortest distance between the centres of two adjacent fins along the periphery of the outer wall of the hollow fibre.

A spinneret shown in Figure 6 is ordinarily used for spinning of finned hollow fibres. A gas or liquid for formation of the hollow portion is extruded from a portion 1, and the spinning liquid of the hollow fibre membrane-forming material is extruded from a portion 2. Then, the extruded spinning liquid is cooled and solidified and the shape of the hollow fibre is fixed. Nozzles as shown in Figures 7 and 8 may be used as means for narrowing the root of the fin portion. If the viscosity of the spinning liquid is lower than 100 P, the shape of the fin is not normally fixed and the intended object is not sufficiently attained.

On the other hand, if the melt viscosity of the spinning liquid is too high and exceeds 10,000 P, the pressure loss at the extrusion hole of the spinneret is increased, and a mechanical problem arises and it is impossible to impart smooth drafting (drawing) to the extrudate. Accordingly, breaking is readily caused during spinning and the thickness unevenness is caused, and stable spinning is impossible.

The selective-permeable cellulose type hollow fibres of the present invention comprise a cellulose ester polymer as the main constituent, for example cellulose acetates such as cellulose diacetate and cellulose triacetate, cellulose propionate, cellulose butyrate, cellulose acetate butyrate, and cellulose nitrate. These cellulose ester polymers may be used singly or in the form of a mixture of two or more of them. Cellulose diacetate and cellulose triacetate are preferred as the cellulose ester polymer.

The cellulose ester polymer used in the present invention is characterised in that the average degree of polymerisation is at least 150. By the average degree of polymerisation referred to herein is meant a value obtained by dividing the weight mean molecular weight by the molecular weight of the recurring unit of the polymer. As means for determination of the weight mean molecular weight, there can be mentioned gel filtration chromatography, the measurement of the coefficient of viscosity, the measurement of the sedimentation equilibrium and the light scattering method.

If the average degree of polymerisation of the cellulose type polymer is lower than 150, a selective-permeable cellulose type hollow fibre having fins having a large height can hardly be obtained, and a hollow fibre having a low re-wet elongation can hardly be obtained. It is preferred that the average degree of polymerisation be at least 160, especially at least 170. The upper limit of the average degree of polymerisation is not particularly critical, but from the practical viewpoint, it is preferred that the degree of polymerisation be lower than 230, especially lower than 200.

The hollow fibre of the present invention is characterised in that the re-wet elongation is lower than 3%. If the re-wet elongation exceeds 3%, when the hollow fibre is filled in the fluid separator in the substantially dry state and is then re-wetted with water or an aqueous solution, the hollow fibre is excessively elongated, with the result that local contact or close approaching is caused among hollow fibres and the hollow fibres are readily bent or curved. It is preferred that the re-wet elongation be lower than 2.5%. The lower limit of the re-wet elongation is not particularly critical, but if the re-wet elongation is higher than 0.5%, especially higher than 1%, the hollow fibre shows an appropriate elongation when re-wetted in the fluid separator and the hollow fibre bundle is expanded throughout the fluid separator. Incidentally, the re-wet elongation $\alpha$ is determined by measuring the length $\ell$ of the hollow fibre in the substantially dry state under a load of about 0.1 g/den (0.9 g/tex), measuring the length $\ell_1$ of the hollow fibre in the wet state under a load of about 0.01 g/den and making the calculation according to the formula of

$$\alpha = \frac{\ell_1 - \ell}{\ell} \times 100.$$

The substantially dry state means a state of a glycerol content of 30 to 60% and a water content of 0.5 to 30%, preferably 0.5 to 9%, which is produced by immersing the hollow fibre in an aqueous solution of glycerol and then drying the hollow fibre.

It is preferred that the wet tensile strength of the hollow fibre of the present invention be at least 0.3 g/den (2.7 g/tex), the shape-retaining property is poor, and the hollow fibre is readily broken in the preparation process or at the step of assembling the fluid separator. This phenomenon is especially prominent when the outer diameter d is 100 to 300 $\mu$m and the thickness is 5 to 25 $\mu$m. The upper limit of the wet tensile strength is not particularly critical. For example, the wet tensile strength is ordinarily up to 0.8 g/den (7.2 g/tex).

In the hollow fibre of the present invention, it is preferred that the flexural rigidity in the substantially wet state be at least 200 mg/200 fibres, and that the rupture pressure as the factor indicating the pressure resistance when the interior of the hollow fibre in the wet state is compressed be at least 4 kg/cm$^2$. If the flexural rigidity and rupture pressure are within the above-mentioned ranges, handling of hollow fibres is facilitated at the step of assembling the blood treatment device, the lengths of the hollow fibres are readily uniformalised in the fluid separator and the hollow fibres are hardly broken while the fluid separator is actually operated under compression.

The cellulose type hollow fibre of the present invention has a selective permeability to fluids. For example, when the cellulose type hollow fibre is used for hemodialysis, it is preferred that the water permeation capacity UFR of the hollow fibre exclusive of the fin portion be 1.0 to 30.0 ml/hr.mmHg, especially 3.0 to 10.0 ml/hr.mmHg.

The process for the preparation of the cellulose ester hollow fibre according to the present invention is characterised in that a liquid mixture comprising a cellulose ester polymer having an average degree of polymerisation of at least 150 and other additives is used as the spinning liquid, and the spinning liquid is extruded together with a core agent from a spinneret for a finned hollow fibre in the state where the viscosity is in the range of from 100 to 10,000 P. It is preferred that the viscosity be 200 to 5,000 P, especially 500 to 3,000 P. The melt viscosity is measured by using a flow tester.

In the melt spinning process, the spinning liquid is a heated melt, and the melt is extruded from the spinneret and cooled to form a solidified finned hollow fibre. Then, at least a part of the additive in the finned hollow fibre is extracted and removed by a solvent incapable of dissolving the cellulose ester polymer but capable of dissolving the additive, and if necessary, the hollow fibre is subjected to an alkali treatment. Thus, a finned cellulose type hollow fibre having a selective permeability can be obtained. In this melt spinning process, if the time required for substantial solidification of the hollow fibre by cooling from the point of extrusion of the heated solution from the spinneret is less than 10 seconds, less than 5 seconds, spinning can be performed stably while retaining a good shape of the fin. By the term "solidification" used herein is meant the state where the spun fibre loses the flowability and attenuation is not advanced any more by the winding tension. The solidification is determined by taking out a fibre being spun by a clipper and measuring the point of termination of the attenuation.

A specific example of the melt spinning process will now be described. A heated spinning liquid (melt or solution) is extruded in a gas or spinning bath according to customary procedures, for example, from a hollow hole of a spinneret having a notch in the periphery of a double annular portion, and spinning is conducted while retaining the hollow portion by filling a gas or liquid substantially incapable of dissolving the membrane material or reacting therewith into the central hollow portion. For example, a plasticiser such as polyethylene glycol is added as the additive to flakes of cellulose diacetate, and the mixture is molten and the melt is extruded into air from a hollow hole of the spinning nozzle. Then, nitrogen gas is blown into the central portion and simultaneously, the extrudate is cooled. The plasticiser is removed from the obtained hollow fibre extrudate. If necessary, a saponification treatment is carried out with caustic soda. Thus, a finned hollow fibre having a solute selective permeability is prepared.

As the plasticiser, there can be mentioned polyalkylene glycols such as polyethylene glycol, glycols having an ethylene/propylene chain in the molecule, glycerol, diglycerol, sulforanes, caprolactones, and dimethylsulfoxide. The amount of the plasticiser added to the spinning solution is appropriately determined according to the intended use of the hollow fibre. For example, when the hollow fibre is used for the hemodialysis, it is preferred that the amount of the plasticiser be 20 to 70% by weight, especially 25 to 60% by weight.

In the process for the preparation of the hollow fibre of the present invention, it is sometimes preferred that the spinning be carried out at a winding speed higher than the extrusion speed. In this case, it is preferred that the draft ratio be 30 to 200 in case of the melt spinning process, the draft ratio referring to that before the solidification of the spun filament. Optionally, the spun filament may further be drafted after the solidification thereof, but usually, such further drafting is not necessary.

The present invention will now be described in detail with reference to the following examples.

Example 1

To 100 parts of cellulose diacetate (having an average polymerisation degree of 170) was added 50 parts of polyethylene glycol (having a molecular weight of 200), and the mixture was molten at 230°C and was extruded through an annular double slit for finned hollow fibres while introducing nitrogen gas into the core portion. The spun fibres were immersed in hot water to dissolve out the polyethylene glycol. Then, the saponification was carried out with an aqueous solution of sodium hydroxide and the fibres were immersed in an aqueous solution containing glycerol at a concentration of 80% by weight and were then dried by hot air to obtain finned hollow fibres for the hemodialysis, which had an inner diameter of about 200 $\mu$m, a fin-free portion thickness of about 18 to 30 $\mu$m and 6 fins. The re-wet elongation, the tensile strength in the wet state, the flexural rigidity and the rupture pressure of the hollow fibres were as shown in Table 1.

The so-obtained hollow fibres were filled in a circular tube shell to assemble a blood dialyzer having an effective membrane area and filling ratio shown in Table 1. The in vitro ultrafiltration performance and dialysis performance and the amount of the residual blood were measured. The obtained results are shown in Table 1.

Examples 2 to 4

Spinning was carried out in the same manner as described in Example 1 by using cellulose diacetate having an average degree of polymerisation of 160, 180 or 200 to obtain hollow fibres having 6 fins having configurations shown in Table 1. Blood dialyzers were assembled in the same manner as described in Example 1. The characteristics of the hollow fibres and blood dialyzers were measured. The obtained results are shown in Table 1.

Comparative Examples 1 and 2

Hollow fibres and blood dialyzers were prepared in the same manner as described in Example 2 by using cellulose diacetate having a degree of polymerisation of 120 to 140. The characteristics of the hollow fibres and dialyzers were measured. The obtained results are shown in Table 1.

Examples 5 and 6 and Comparative Example 3

To 100 parts of cellulose diacetate (having an average degree of polymerisation of 180) were added 135 parts in total of polyethylene glycol and diethylene glycol, and the mixture was molten at 200°C and extruded through a spinneret having an annular double slit for finned hollow fibres. The plasticiser was dissolved out by hot water. Thus, there were obtained hollow fibres in which the inner diameter was 205 $\mu$m, the thickness of the fin-free portion was 12 to 15 $\mu$m and the number of fins was 6. Blood dialyzers were assembled by using these hollow fibres. The characteristics of the hollow fibres and dialyzers were measured. The obtained results are shown in Table 1.

Table 1

| | Example 1 | Example 2 | Example 3 | Example 4 | Comparative Example 1 | Comparative Example 2 | Example 5 | Example 6 | Comparative Example 3 |
|---|---|---|---|---|---|---|---|---|---|
| Fin Height (μ)(H) | 26 | 20 | 28 | 35 | 13 | 13 | 10 | 8 | 6 |
| Fin Width (μ)(W) | 20 | 25 | 20 | 18 | 30 | 28 | 15 | 12 | 15 |
| Re-wet Elongation (%) | 1.5 | 1.8 | 1.2 | 0.8 | 3.5 | 3.2 | 0.5 | 0.6 | 0.8 |
| Wet Strength (g/den) | 0.5 | 0.45 | 0.53 | 0.58 | 0.30 | 0.35 | 0.6 | 0.6 | 0.5 |
| Flexural Rigidity (wet) (mg) | 250 | 220 | 250 | 280 | 180 | 170 | 400 | 340 | 350 |
| Rupture Pressure (wet) (kg/cm$^2$) | 4.3 | 4.0 | 4.8 | 5.5 | 3.0 | 3.4 | 4.5 | 4.0 | 4.2 |
| Effective Membrane Area (m$^2$) | 1.10 | 1.15 | 1.03 | 0.96 | 1.20 | 1.20 | 1.20 | 1.20 | 1.20 |
| Occupancy Ratio (%) | 46 | 48 | 43 | 40 | 50 | 50 | 45 | 45 | 50 |
| UFR (ml/mmHg·hr) | 4.8 | 5.0 | 4.5 | 4.0 | 6.0 | 5.4 | 6.5 | 7.0 | 6.5 |
| Dialysance (ml/min) | 168 | 167 | 170 | 170 | 163 | 164 | 165 | 168 | 158 |
| Amount (ml) of Residual Blood | below 0.1 | below 0.1 | below 0.1 | below 0.1 | 0.3 | 0.3 | below 0.1 | below 0.1 | 0.2 |
| Coagulation of Blood | not caused | not caused | not caused | not caused | slight | slight | not caused | not caused | not caused |

Claims

1. A blood treatment device comprising hollow fibres contained in a shell, the hollow fibres having a selective permeability and having on the periphery thereof 1 to 10 fins extended in the longitudinal

EP 0 321 447 B1

direction, characterised in that the fibres are made by plasticising and melt spinning a cellulose ester polymer having an average degree of polymerisation of at least 150, the ratio H/W of the fin height H to the width W is at least 0.5, and the re-wet elongation is lower than 3%.

2. A blood treatment device according to claim 1, in which the tensile strength of the fibres in the wet state is at least 2.7 g/tex (0.3 g/den).

3. A blood treatment device according to claim 1 or claim 2, in which the flexural rigidity of the hollow fibres is at least 200 mg/200 fibres.

4. A blood treatment device according to any preceding claim, in which the rupture pressure of the hollow fibres is at least 4 kg/cm$^2$.

5. Cellulose type hollow fibres for use in a blood treatment device comprising hollow fibres contained in a shell, the fibres having a selective permeability and having on the periphery thereof 1 to 10 fins extended in the longitudinal direction, characterised in that the fibres are made by plasticising and melt spinning a cellulose ester polymer having an average degree of polymerisation of at least 150, the ratio H/W of the fin height H to the width W is at least 0.5, and the re-wet elongation is lower than 3%.

6. Cellulose type hollow fibres according to claim 5, in which the tensile strength of the fibres in the wet state is at least 2.7 g/tex (0.3 g/den).

7. Cellulose type hollow fibres according to claim 5 or claim 6, in which the flexural rigidity of the hollow fibres is at least 200 mg/200 fibres.

8. Cellulose type hollow fibres according to any of claims 5 to 7, in which the rupture pressure of the hollow fibres is at least 4 kg/cm$^2$.

**Patentansprüche**

1. Blutbehandlungsvorrichtung, welche in einem Gehäuse angeordnete Hohlfasern umfaßt, wobei die Hohlfasern eine selektive Permeabilität und an ihrem Umfang 1 bis 10 Rippen aufweisen, welchletztere sich in der Längsrichtung erstrecken, dadurch gekennzeichnet, daß die Fasern durch Plastifizieren und Schmelzspinnen eines Celluloseesterpolymers mit einem mittleren Polymerisationsgrad von mindestens 150 hergestellt sind, wobei das Verhältnis H/W der Rippenhöhe H zur Breite W mindestens 0,5 beträgt und die Wiederbefeuchtungsdehnung geringer als 3 % ist.

2. Blutbehandlungsvorrichtung nach Anspruch 1, bei welcher die Zugfestigkeit der Fasern im nassen Zustand wenigstens 2,7 g/dtex (0,3 g/den) ist.

3. Blutbehandlungsvorrichtung nach Anspruch 1 oder 2, bei welcher die Biegesteifigkeit der Hohlfasern mindestens 200 mg/200 Fasern beträgt.

4. Blutbehandlungsvorrichtung nach einem der voranstehenden Ansprüche, bei welcher der Berstdruck der Hohlfasern mindestens 4 kg/cm$^2$ beträgt.

5. Hohlfasern vom Cellulosetyp zur Verwendung in einer Blutbehandlungsvorrichtung, welche in einem Gehäuse angeordnete Hohlfasern umfaßt, wobei die Fasern eine selektive Permeabilität und an ihrem Umfang 1 bis 10 Rippen aufweisen, welche sich in der Länggrichtung erstrecken, dadurch gekennzeichnet, daß die Fasern durch Plastifizieren und Schmelzspinnen eines Celluloseesterpolymers mit einem mittleren Polymerisationsgrad von mindestens 150 hergestellt sind, wobei das Verhältnis H/W der Rippenhöhe H zu der Breite W mindestens 0,5 beträgt und die Wiederbefeuchtungsdehnung geringer als 3 % ist.

6. Hohlfasern vom Cellulosetyp nach Anspruch 5, bei welchen die Zugfestigkeit der Fasern im nassen Zustand mindestens 2,7 g/dtex (0,3 g/den) beträgt.

**7.** Hohlfasern vom Cellulosetyp nach Anspruch 5 oder 6, bei welchen die Biegesteifigkeit der Hohlfasern mindestens 200 mg/200 Fasern beträgt.

**8.** Hohlfasern vom Cellulosetyp nach einem der Ansprüche 5 bis 7, bei welchen der Berstdruck der Hohlfasern mindestens 4 kg/cm$^2$ beträgt.

**Revendications**

**1.** Dispositif de traitement du sang comportant des fibres creuses contenues dans une enveloppe, les fibres creuses ayant une perméabilité sélective et ayant sur la périphérie de celles-ci 1 à 10 ailettes qui s'étendent dans la direction longitudinale, caractérisé en ce que les fibres sont réalisées par plastification et filage au fondu d'un polymère d'ester de cellulose ayant un degré moyen de polymérisation d'au moins 150, le rapport H/W de la hauteur d'ailette H sur la largeur d'ailette W est d'au moins 0,5, et l'allongement à l'état mouillé à nouveau est inférieur à 3%.

**2.** Dispositif de traitement du sang selon la revendication 1, dans lequel la résistance à la traction des fibres à l'état mouillé est d'au moins 2,7 g/tex (0,3 g/den).

**3.** Dispositif de traitement du sang selon la revendication 1 ou la revendication 2, dans lequel la rigidité en flexion des fibres creuses est d'au moins 200 mg/200 fibres.

**4.** Dispositif de traitement du sang selon l'une quelconque des revendications précédentes, dans lequel la pression de rupture des fibres creuses est d'au moins 4 kg/cm$^2$.

**5.** Fibres creuses cellulosiques pour utilisation dans un dispositif de traitement du sang comportant des fibres creuses contenues dans une enveloppe, les fibres ayant une perméabilité sélective et ayant sur la périphérie de celles-ci 1 à 10 ailettes qui s'étendent dans la direction longitudinale, caractérisées en ce que les fibres sont réalisées par plastification et filage au fondu d'un polymère d'ester de cellulose ayant un degré moyen de polymérisation d'au moins 150, le rapport H/W de la hauteur d'ailette H sur la largeur d'ailette W est d'au moins 0,5, et l'allongement à l'état mouillé à nouveau est inférieur à 3%.

**6.** Fibres creuses cellulosiques selon la revendication 5, dans lesquelles la résistance à la traction des fibres à l'état mouillé est d'au moins 2,7 g/tex (0,3 g/den).

**7.** Fibres creuses cellulosiques selon la revendication 5 ou la revendication 6, dans lesquelles la rigidité en flexion des fibres creuses est d'au moins 200 mg/200 fibres.

**8.** Fibres creuses cellulosiques selon l'une quelconque des revendications 5 à 7, dans lesquelles la pression de rupture des fibres creuses est d'au moins 4 kg/cm$^2$.

Fig. 1

Fig. 2  Fig. 3  Fig. 4

Fig. 5

Fig. 6  Fig. 7  Fig. 8